# EUROPÄISCHE PATENTSCHRIFT

(11) **EP 4 101 570 B1**
(45) Veröffentlichungstag und Bekanntmachung des Hinweises auf die Patenterteilung: **20.11.2024**
(21) Anmeldenummer: 22177179.3
(22) Anmeldetag: 03.06.2022
(51) Int. Cl.: B23G 7/00, B21J 5/06, B21J 15/02, B21J 15/12

(54) **VERFAHREN UND VORRICHTUNG ZUR ÜBERWACHUNG UND/ODER REGELUNG EINES FLIESSLOCH- UND GEWINDEFORMPROZESSES**
METHOD AND DEVICE FOR MONITORING AND / OR REGULATING A FLOW HOLE AND THREAD-FORMING PROCESS
PROCÉDÉ ET DISPOSITIF DE SURVEILLANCE ET/OU DE RÉGULATION D'UN PROCESSUS DE FORMATION DE TROU D'ÉCOULEMENT ET DE FILETAGE

(30) Priorität: 11.06.2021 DE 102021115209
(43) Veröffentlichungstag der Anmeldung: 14.12.2022
(73) Patentinhaber: Atlas Copco IAS GmbH, 75015 Bretten (DE)
(72) Erfinder: Ludsteck, Michael, 81669 München (DE); Guglhör, Manuel, 83671 Benediktbeuern (DE)
(74) Vertreter: Eder Schieschke & Partner mbB

(56) Entgegenhaltungen:
- EP-A1- 2 954 973
- DE-A1- 102015 005 759
- DE-A1- 102016 007 332
- DE-B3- 102019 207 885

## Beschreibung

Die vorliegende Erfindung betrifft ein Verfahren und eine Vorrichtung zur Überwachung und/oder Regelung eines Fließloch- und Gewindeformprozesses, der im Weiteren vereinfacht auch als "Schraubprozess" oder "Fügeprozess" bezeichnet werden kann. Dabei wird ein Füge-Element in mehreren unmittelbar aufeinanderfolgenden Prozessschritten in ein Werkstück eingebracht, wobei unter "Werkstück" in der Regel zwei miteinander zu verbindende und aneinander liegende Elemente verstanden werden sollen.

Das Fügeelement kann insbesondere eine Fließlochschraube sein. Vergleichbare Elemente werden auch als "Flowpush-Elemente" oder "Fließloch-formende Einpressbolzen" bezeichnet. Die nachfolgenden Ausführungen beziehen sich daher stellvertretend für den allgemeineren Begriff "Füge-Element" in vereinfachter Terminologie auf die konkrete Ausführungsform des Füge-Elements als "Fließlochschraube" oder einfach nur "Schraube".

Bei dem an sich bekannten Fügeprozess mit einer Fließlochschraube wird die Schraube zunächst mit ihrer Spitze voraus auf das Werkstück aufgesetzt (Finden). Anschließend wird die Drehzahl erhöht und die Schraube mit hoher Andruckkraft gegen das Werkstück gedrückt, wobei sich das Werkstückmaterial erwärmt und zu fließen beginnt. Unter hoher Andruckkraft und mit schnell abnehmender Drehzahl wird die Schraube dann bis zum Beginn des Gewindeabschnitts in das Werkstück gedrückt (Durchzugformen). Mit deutlich reduzierter Drehzahl wird die Schraube dann in das Werkstück eingedreht und formt dabei darin ein Gewinde (Gewindeformen). Schließlich wird die Schraube bis zur Kopfauflage in das Werkstück eingedreht und angezogen (Endanzug).

Der Übergang von einem in den anderen Prozessschritt muss genau kontrolliert werden und gezielt erfolgen. Beispielsweise muss der Übergang vom Durchzugformen zum Gewindeformen genau detektiert werden. Denn insbesondere die Drehzahl (aber auch andere Prozessgrößen wie etwa die Andruckkraft) müssen dabei geändert werden, um einerseits erst bei ausreichender Eindringtiefe mit dem Gewindeformen zu beginnen und andererseits nicht mit zu hoher Drehzahl zu tief einzudringen, um die saubere Ausbildung des Gewindes entsprechend seiner Steigung nicht zu gefährden. Allerdings muss der Übergang nicht einem bestimmten Zeitpunkt im Sinne eines plötzlich auftretenden Ereignisses zugeordnet werden. Stattdessen kann das Durchzugformen auch in einem stetigen, durch regelndes oder steuerndes Verhalten kontrollierten Prozess in das Gewindeformen übergehen. Gleiches gilt auch für den Übergang zwischen anderen Prozessschritten im Fließloch-Schraubprozess. Im Stand der Technik wird ein Umschaltzeitpunkt beispielsweise durch Erfassen der Eindringtiefe ermittelt. Dabei wird davon ausgegangen, dass das Durchzugformen immer dann abgeschlossen ist, wenn beispielsweise der Abstand des Schraubenkopfs zur Werkstückoberfläche ein vorgegebenes Maß unterschreitet. Dabei bleiben jedoch Toleranzen der Werkstückdicke unberücksichtigt. Durchdringt die Schraube das Werkstück zu früh, so greift der gewindeformende Teil der Schraube mit zu hoher Drehzahl und Prozesskraft in das Werkstück und zerstört dadurch gegebenenfalls das Gewinde.

Alternativ ist aus der DE 10 2007 024 627 B3 bekannt, den Gradienten der Eindringtiefe als Umschaltkriterium heranzuziehen. Dabei wird beispielsweise die Eindringtiefe pro Zeit überwacht. In dem Moment, in dem das Material des Werkstücks zu fließen beginnt, dringt die Schraube in das Werkstück ein. Für den dabei ansteigenden Gradienten "Eindringtiefe pro Zeit" kann das Überschreiten eines vorgebbaren Schwellwertes als Umschaltkriterium verwendet werden.

Die EP 2 954 973 A offenbart ein Verfahren gemäß dem Oberbegriff des Anspruchs 1 zur Überwachung eines Fließloch- und Gewindeformprozesses. Dabei wird der beim Einschrauben eines Fügemittels erforderliche Motorstrom gemessen und mit Referenzwerten verglichen, um auf einen ordnungsgemäßen oder fehlerhaften Ablauf des Verfahrens schließen zu können.

Aus der DE 10 2015 005 759 A1 ist ein Verfahren und eine Vorrichtung zum Fügen von wenigstens zwei Bauteilen bekannt. Dabei wird während des von einem Roboter durchgeführten Fügevorgangs wenigstens ein Quantifizieren der Parameter unmittelbar vom Roboter ermittelt und ausgewertet, um weitere Sensoren für die Prozessüberwachung zu vermeiden.

Aufgabe der Erfindung ist es, eine alternative Lösung zur Steuerung und Regelung des Fügeprozesses anzubieten, die auf der Beobachtung von Prozessdaten basiert.

Die Aufgabe wird gelöst durch ein Verfahren nach Anspruch 1 und eine Vorrichtung nach Anspruch 9. Weitere vorteilhafte Ausführungsformen ergeben sich aus den Unteransprüchen.

Die Erfindung geht von der Überlegung aus, den Fügeprozess bzw. die Einleitung der einzelnen Prozessschritte zu regeln bzw. zu steuern auf der Basis einer im Prozess gebildeten Prozessgröße E, welche die für die Durchführung des Fügeprozesses geleistete Arbeit bzw. aufgewandte Energie berücksichtigt. Da die einzelnen Prozessschritte des Fügeprozesses bei ordnungsgemäßem Verlauf mit einem (innerhalb gewisser Toleranzen liegenden) typischen Energieverbrauch einhergehen, kann dieser Energieverbrauch (bzw. die im Fügeprozess von den beteiligten Maschinen geleistete Arbeit) als Kriterium für einen ordnungsgemäßen oder möglicherweise fehlgeschlagenen Fügeprozess herangezogen werden. Die während des Fügeprozesses gebildete Prozessgröße E kann dazu mit einem Vergleichswert E* verglichen werden, welcher beispielsweise einen ordnungsgemäß ablaufenden Fügeprozess repräsentiert. Weicht die Prozessgröße (vorzugsweise innerhalb vorgebbaren Toleranzen) von ihrem zugehörigen Vergleichswert E* ab, so kann dies als Indiz für einen fehlgeschlagenen Fügeprozess herangezogen und zur weiteren Steuerung des Verfahrens oder Ausgabe einer entsprechenden Fehlermeldung verwendet werden.

Alternativ zur erfindungsgemäßen, energiebezogenen Prozessgröße E könnten während des Fügeprozesses theoretisch auch verschiedene andere Prozessgrößen, wie etwa die Drehzahl N, das Drehmoment M, die Vorschubkraft F oder die Eindringtiefe Z überwacht und mit zugehörigen Vergleichswerten verglichen werden. Diese stehen jedoch oft in Wechselwirkung miteinander und geben bei isolierter Betrachtung nicht immer ein klares Kriterium für den ordnungsgemäßen (*"IO", "in Ordnung"*) oder nicht ordnungsgemäßen (*"NIO", "Nicht in Ordnung"*) Verlauf des Fügeprozesses. Die eigenständige Betrachtung der im Prozess aufgewandten Energie bzw. geleisteten Arbeit hingegen liefert ein einfaches und zuverlässiges Gesamt-Kriterium für die Entscheidung "IO", oder "NIO".

Die erfindungsgemäße Prozessgröße E wird gebildet mit der während des Fügeprozesses verrichteten Arbeit, die beispielsweise in der Einheit Kilojoule [kj] dargestellt werden könnte. Der Wert könnte beispielsweise mithilfe der Stromaufnahme der am Fügeprozess beteiligten Maschinen bzw. Motoren erfasst werden. Dabei muss die Prozessgröße E nicht zwingend der tatsächliche numerische bzw. digitale Wert der geleisteten Arbeit sein, auch wenn dies aufgrund der einfachen Handhabung vorteilhaft ist. Denkbar ist es stattdessen auch, die Prozessgröße E aus einem Hilfswert zu bilden, der seinerseits die geleistete Arbeit repräsentiert. Beispielsweise könnte die Prozessgröße E die geleistete Arbeit in normierter Form (dimensionslos) oder in Bezug zu einem oder mehreren anderen Prozessgrößen oder Faktoren enthalten, wenn dies für die Signalverarbeitung oder den durchzuführenden Vergleich zweckdienlicher ist. Der Vergleich erfolgt dann mit einem analog zur Prozessgröße gebildeten Vergleichswert E*.

Der erfindungsgemäße Vergleich E - E* ermöglicht es außerdem auf einfache Weise, bestehende Toleranzen bezüglich des Fügeelements, der Materialbeschaffenheit oder der Materialdicke des Werkstücks zu erkennen. Das Durchdringen eines dickeren Materials erfordert gerade beim Durchzugformen einen höheren Energieaufwand. Übersteigt hier die ermittelte Prozessgröße E den zugehörigen Vergleichswert E* außerhalb zulässiger Toleranzen, so könnte dies als Indiz für eine unzulässig große Werkstückdicke interpretiert werden. Ein unerwartet großer Energieverbrauch beim Gewindeformen hingegen könnte darauf hindeuten, dass das Fügeelement einen zu großen Durchmesser aufweist. Übersteigt die verrichtete Arbeit erst im Prozessschritt "Endanzug" den zulässigen Vergleichswert, könnte dies stattdessen auf ein unzulässig hohes Anzugsmoment hindeuten.

Der Vergleichswert E* ist vorzugsweise konstant und beispielsweise in einer Datenbank hinterlegt, welche durch die Steuerung abrufbar ist, die den Fügeprozess bzw. die dafür erforderlichen Komponenten ansteuert. Dabei ist es denkbar, für unterschiedliche Ereignisse oder Zeitpunkte während des Fügeprozesses auch unterschiedliche Vergleichswerte E* zu hinterlegen. So ist es nach einer vorteilhaften Ausführungsform der Erfindung zum Beispiel vorgesehen, für einen oder mehrere der vorgenannten Prozessschritte (Finden, Durchzugformen, Gewindeformen, Endanzug) jeweils einen eigenen Vergleichswert E* zu hinterlegen, der den erforderlichen bzw. typischen Energieaufwand für den jeweiligen Prozessschritt bei ordnungsgemäßem Verlauf ("IO") repräsentiert. Die Prozessgröße E wird während des Fügeprozesses so gebildet, dass sie die für die einzelnen Prozessschritte tatsächlich aufgewandte Energie repräsentiert, so dass ein entsprechender Vergleich zum Abschluss jedes Prozessschrittes mit dem jeweiligen Vergleichswert E* möglich ist. Alternativ könnte auch die für die einzelnen Prozessschritte aufgewandte Energie über den gesamten Fügeprozess aufsummiert und mit einem entsprechend gebildeten Vergleichswert nach jedem Prozessschritt verglichen werden. Folgendes Beispiel soll dies verdeutlichen:
In der nachfolgenden Tabelle ist die für einen bestimmten Fügeprozess pro Prozessschritt verrichtete Arbeit einzelnen und in aufsummierter Form dargestellt:

| | | Istwert E | | | Sollwert E* | |
|---|---|---|---|---|---|---|
| Prozessschritt | | verrichtete Arbeit [kj] | aufsummierte Arbeit [kj] | | verrichtete Arbeit [kj] | aufsummierte Arbeit [kj] |
| | | | | | | |
| Finden | | 0,5 | 0,5 | | 0,6 | 0,6 |
| Durchzugformen | | 36,5 | 37 | | 37 | 37,6 |
| Gewindeformen | | 9 | 46 | | 10 | 47,6 |
| Endanzug | | 2 | 48 | | 2 | 49,6 |

Die Prozessgröße bzw. Istwert E gibt die tatsächlich im Fügeprozess jeweils verrichtete Arbeit wieder. Der Sollwert bzw. Vergleichswert E* gibt für den jeweiligen Prozessschritt einen typischen Wert oder einen oberen Grenzwert an und könnte beispielsweise in einer der Steuereinheit zugänglichen Speichereinheit hinterlegt sein. Nach Beendigung des Prozessschrittes "*Durchzugformen*" beispielsweise ergäbe der Vergleich zwischen der Prozessgröße E (36,5 kj) und dem Vergleichswert E* (37 kj) ein Ergebnis "IO", da der hier als Grenzwert für diesen Prozessschritt hinterlegte Sollwert nicht überschritten wurde. Läge stattdessen die Prozessgröße E für den Prozessschritt "*Durchzugformen*" beispielsweise bei 50 kj, und damit deutlich über dem zugehörigen Vergleichswert von 37 kj, so wäre dies ein Indiz für den nicht ordnungsgemäß erfolgten Prozessschritt, das Vergleichsergebnis lautet dann "NIO".

Ein auf die aufsummierte Energie bzw. Arbeit gerichteter Vergleich ist erfindungsgemäß wesentlich.

Nach Abschluss des Prozessschrittes "*Gewindeformen*" läge gemäß obigem Beispiel der entsprechend gebildete Istwert für die bereits abgeschlossenen Prozessschritte bei insgesamt 46 kj, wobei der zugehörige Sollwert von 47,6 kj nicht überschritten wurde, sodass auch hier aus dem Vergleich ein Prüfungsergebnis "IO" resultiert. Die Aufsummierung erfolgt beginnend mit einem vorgebbaren Startereignis, wobei es sich beispielsweise um den Beginn des Fügeprozesses (also den Beginn des Prozessschrittes "Finden") handeln kann. Soll nur die Energie eines bestimmten Prozessschrittes oder beginnend ab einem bestimmten Zeitpunkt oder Ereignis während des Fügeprozesses durch die Prozessgröße E erfasst werden, so erfolgt das Aufsummieren entsprechend zu Beginn des jeweiligen Prozessschrittes bzw. ab dem gewählten Zeitpunkt oder Ereignis des Fügeprozesses.

Ergänzend zur Betrachtung der pro gesamtem Prozessschritt oder aufsummiert verrichteten Arbeit könnte eine weitere Prozessgröße auch einen Energie-Gradienten repräsentieren, beispielsweise die aktuell verrichtete Arbeit pro Zeit (Leistung) oder Arbeit pro Weg bzw. Eindringtiefe. Entsprechend gebildete Vergleichswerte dienen wieder als Referenz, um den Ablauf des Fügeprozesses als "IO" oder "NIO" zu erkennen. So könnte etwa ein für den Prozessschritt "*Durchzugformen*" gültiger maximaler Gradient von 200 j/ms als Vergleichswert E* hinterlegt sein, der für ein Ergebnis "IO" von der entsprechenden Prozessgröße E während dieses Prozessschrittes nicht überschritten werden darf. Liegt die Prozessgröße E über diesem Vergleichswert E*, könnte dies auf ein schwerer zu durchdringendes Material hindeuten. Umgekehrt könnte ein Unterschreiten eines durch einen Vergleichswert definierten Gradienten (wenn also pro Zeit oder Eindringtiefe vergleichsweise wenig Arbeit verrichtet wird) als Indiz dafür gewertet werden, dass das Fügemittel rotiert, ohne dabei planmäßig ins Material einzudringen - die Schraube verglüht. Für andere Prozessschritte können andere Vergleichswerte hinterlegt sein, wobei die Steuereinheit dazu ausgebildet ist, den jeweils gültigen Vergleichswert heranzuziehen.

Als Vergleichswert E* kann auch ein Wertebereich vorgegeben werden, innerhalb dessen die Prozessgröße E liegen muss, um im Vergleich beider Werte zu einem "IO"-Ergebnis zu gelangen. Der Wertebereich kann durch einen oberen und unteren Grenzwert beschrieben sein. Alternativ kann auch für einen Vergleichswert E* eine zulässige Toleranz (bspw. +/- 10% oder -3% und +15%) vorgegeben werden, wobei die Prozessgröße E innerhalb des sich so ergebenden Toleranzbandes beispielsweise als "IO" gewertet werden könnten.

Zweckmäßigerweise ist zur Durchführung des erfindungsgemäßen Verfahrens eine Steuereinheit vorgesehen, welche die Erfassung der Prozessgröße E entsprechend steuert, die jeweils relevanten Vergleichswerte E* aus einer Speichereinheit abruft oder aus anderen Daten ermittelt, den Vergleich zwischen E und E* durchführt und vergleichsabhängig ein Steuersignal und/oder eine Meldung an den Bediener ausgibt.

Nach einer vorteilhaften Ausführungsform der Erfindung werden die zugehörigen Vergleichswerte E* in Abhängigkeit bestimmter, für das Verfahren konstanter Prozessparameter ausgewählt. So ergeben sich beispielsweise unterschiedliche Prozessgrößen E bzw. Vergleichswerte E* abhängig von der Beschaffenheit des Fügeelements und des Werkstücks (u.a. Durchmesser, Länge, Dicke, Material, gewünschtes Anzugsmoment, gewünschte Prozessdauer etc.). Zweckmäßigerweise sind dann für Fügeprozesse mit solchen konstanten, aber je nach Art des Verfahrens variierenden Prozessparametern entsprechend jeweils unterschiedliche Vergleichswerte in einer Speichereinheit hinterlegt, um für jeden Fügeprozess auf die jeweils zugehörigen Vergleichswerte zugreifen zu können.

Nach einer weiteren vorteilhaften Ausführungsform der Erfindung ist es denkbar, den jeweils heranzuziehenden Vergleichswert E* in Abhängigkeit weiterer, sich im jeweiligen Verfahrensschritt ändernder Prozessgrößen auszubilden. So könnte beispielsweise für die während des Durchzugformens tatsächlich verrichtete Arbeit eine zugehörige Vergleichskurve hinterlegt werden, die für jeden Zeitpunkt oder jede Eindringtiefe einen bestimmten Wert für die bis dahin aufsummierte oder momentan verrichtete Arbeit bereitstellt. Der Vergleichswert ist dann nicht konstant, sondern hängt ab von der Prozessgröße "*Zeit*" oder "*Eindringtiefe*". Ein solchermaßen "enger" am Fügeprozess entlang geführter Vergleichswert E* gestattet eine noch genauere Überprüfung des Verfahrens auch innerhalb der einzelnen Prozessschritte, beispielsweise um einen fehlerhaften Fügeprozess zeitnah abbrechen zu können.

Nach einer weiteren vorteilhaften Ausführungsform des Verfahrens werden einige oder alle Vergleichswerte E* aus anderen, das jeweilige Verfahren kennzeichnenden Daten errechnet, anstatt sie beispielsweise aus Vorversuchen empirisch zu ermitteln. Je nach Art des Fügeprozesses, des Fügeelements und des Werkstücks lassen sich für einzelne Prozessschritte Energiewerte berechnen, die einen ordnungsgemäßen Ablauf des jeweiligen Prozessschrittes repräsentieren. Auch der Verlauf der Prozessgröße E während bestimmter Prozessschritte (beispielsweise der Gradient Energie/Zeit oder Energie/Eindringtiefe) lässt sich innerhalb vertretbarer Toleranzen vorausberechnen und als geeigneter Vergleichswert E* hinterlegen.

Eine andere Möglichkeit zur Bildung geeigneter Vergleichswerte E* besteht darin, die Prozessgröße E für mehrere vorausgegangene und erfolgreich durchgeführte Fügeprozesse jeweils zu erfassen und in geeigneter Form dann als Vergleichswert E* für zukünftige Fügeprozesse abzuspeichern ("anlernen") und/oder auszuwerten bzw. zu dokumentieren. Aus der Historie erfolgreicher Fügeprozesse lassen sich auf diese Weise passende Vergleichswerte aufstellen, ohne diese auf anderem Wege, beispielsweise rechnerisch, zu bestimmen.

Die erfindungsgemäße Überwachung der im Fügeprozess verrichteten Arbeit kann vorteilhaft auch dazu verwendet werden, den Prozess für einen minimalen Energieverbrauch bzw. maximale Standzeiten der verwendeten Werkzeuge zu parametrieren. Durch die Optimierung der Umschaltzeitpunkte beispielsweise kann der Energieverbrauch reduziert werden, da die Drehzahl reduziert werden kann bevor hohe Drehmomente auftreten.

Die erfindungsgemäße Überwachung der während des Prozesses verrichteten Arbeit über die Prozessgröße E gestattet eine besonders einfache Prozesssteuerung. Der Verlauf der Prozessgröße E während des Fügeprozesses (der auch als Energiekurve bezeichnet werden könnte) gibt auf einfache Weise ein aussagekräftiges Abbild des Prozesses wieder. Abweichungen von einem Vergleichswert E* oder einer Vergleichskurve, die als Vergleichswert E* dient und einen ordnungsgemäßen Prozessverlauf repräsentiert, lassen sich schnell erkennen und zur Korrektur von Steuersignalen oder zum Abbruch des Prozesses auswerten.

Eine erfindungsgemäße Fügevorrichtung ist zur Ausführung des vorgenannten Verfahrens ausgebildet. Sie umfasst bevorzugt eine Steuereinheit, welche die den Fügeprozess durchführenden Komponenten (Roboter, Vorschub-Einrichtungen, Motoren etc.) ansteuert. Im Rahmen der Verfahrenssteuerung erhält die Steuereinheit Signale, aus denen einzelne Prozessgrößen des Verfahrens ableitbar sind, insbesondere die erfindungsgemäß die im Prozess verrichtete Arbeit repräsentierende Prozessgröße E. Weiterhin ist die Steuereinheit dazu ausgebildet, aus einer mit ihr verbundenen Speichereinheit dort hinterlegte Vergleichswerte E* abzurufen und mit der Prozessgröße E zu vergleichen. Beispielsweise zum Anlernen kann die Speichereinheit auch selbst Vergleichswerte E* erzeugen und/oder in der Speichereinheit hinterlegen. In Abhängigkeit des Vergleichsergebnisses kann die Steuereinheit entsprechende Meldungen oder Signale, insbesondere auch in digitaler Form, ausgeben bzw. den einzelnen Komponenten zuführen, um erforderlichenfalls in den Verfahrensablauf einzugreifen.

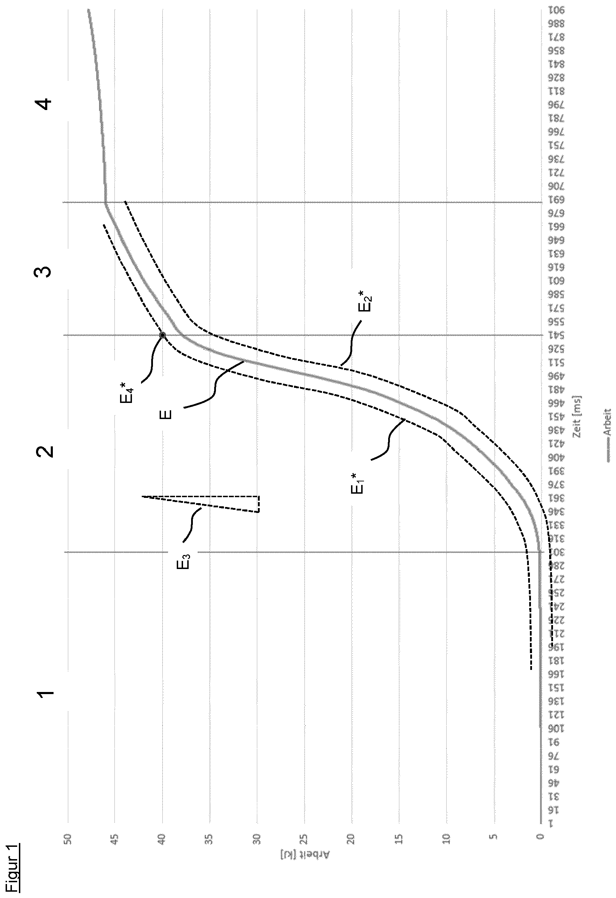

Nachfolgend soll das erfindungsgemäße Verfahren anhand eines Schaubilds näher erläutert werden, welches für die Prozessgröße E die in oben aufgeführter Tabelle gelisteten Werte wiedergibt. Die einzige Figur 1 zeigt das Schaubild, bei dem in beispielhafter und nicht einschränkender Weise die während eines Fließloch- und Gewindeformprozesses (Fügeprozess) mit einer Fließlochschraube als Fügeelement verrichtete Arbeit als Prozessgröße E über der Zeit aufgetragen ist. Der Fügeprozess ist durch vertikale Trennlinien in seine zeitlich nacheinander ablaufenden, einzelnen Prozessschritte gegliedert.

Zur Zeit t=0 beginnt der Prozessschritt "*Finden",* der sich etwa über 300 ms erstreckt. Dabei setzt die Schraube auf dem Werkstück auf (Finden). Die hier verrichtete Arbeit (Aufsetzen der Schraube bzw. des Fügeelements auf das Werkstück mit leichtem Andruck) summiert sich auf etwa 0,5 kj.

Nach Abschluss dieses Prozessschrittes schließt sich das "*Durchzugformen"* an, bei dem das Fügeelement unter stark erhöhter Drehzahl und mit erhöhter Andruckkraft gegen das Werkstück gepresst wird. Das Werkstück wird dadurch erwärmt und beginnt schließlich um die Schraubenspitze herum zu fließen, so dass die Schraube in das Werkstück gedrückt werden kann. Dieser Prozessschritt dauert etwa 240 ms. Zu sehen ist der deutliche Anstieg der verrichteten Arbeit, die für diesen Prozessschritt alleine etwa 36,5 kj beträgt. Die als Summenkurve aufgetragene Prozessgröße E liegt daher zu Beginn des dritten Prozessschrittes bei etwa 37kj.

In diesem nach etwa 540 ms beginnenden nächsten Prozessschritt wird das Fügeelement mit stark reduzierter Drehzahl und weitgehend konstantem Vorschub unter Ausbildung eines Gewindes in das Werkstück geschraubt (*"Gewinderformen"*)*.* Die pro Zeit oder Eindringtiefe verrichtete Arbeit (Energie-Gradient) ist dabei weitgehend konstant, und die Summenkurve E steigt bis zum Zeitpunkt t=690 ms linear auf etwa 46 kj an.

Nach vollständiger Ausbildung des Gewindes erreicht die Schraube in der 4. Prozessstufe mit ihrem Schraubenkopf die Werkstückoberfläche (Kopfauflage), und die Eindringtiefe ändert sich danach nicht mehr signifikant. Die Schraube wird auf Endanzugsmoment angezogen ("*Endanzug*"), wofür innerhalb von ca. 200 ms nochmals ca. 2 kj an Arbeit verrichtet werden. Im gesamten Fügeprozess wurden binnen ca. 900 ms insgesamt etwa 48 kj an Arbeit verrichtet, weshalb die Prozessgröße E am Ende des Fügeprozesses etwa diesen Wert repräsentiert.

Figur 1 zeigt beispielhaft mehrere Vergleichswerte E₁*, E₂*, E₃*, E₄*, die einzeln oder gemeinsam zum Vergleich mit der Prozessgröße E herangezogen werden können, um den ordnungsgemäßen Verlauf des Fügeprozesses zu bewerten.

Der erste Vergleichswert E₁* ist als Kurve ausgeführt, welche die maximal zu verrichtende Arbeit während des zweiten Prozessschrittes "*Durchzugformen"* repräsentiert. E₁* gibt für jeden Zeitpunkt innerhalb dieses Prozessschrittes denjenigen Wert der zu verrichtenden Arbeit an, den die beobachtete Prozessgröße E nicht überschreiten darf wenn das Kriterium "IO" noch als erfüllt angesehen sein soll. Überschreitet die Prozessgröße E den Vergleichswert E₁* während des Prozesses, so könnte die den Vergleich durchführende Steuereinheit den Fügeprozess abbrechen und eine entsprechende Meldung ausgeben.

In ähnlicher Weise repräsentiert der ebenfalls als Kurve ausgeführte zweite Vergleichswert E₂* einen von der Zeit (oder auch von der Eindringtiefe) abhängigen Energiewert, den die Prozessgröße E zur Erfüllung des Kriteriums "IO" nicht unterschreiten darf.

Als dritter Vergleichswert E₃* wurde ein konstanter Gradient [kj/t] vorgegeben, welcher die maximal zulässige Änderung der verrichteten Arbeit pro Zeit beschreibt, die noch eine "IO"-Bewertung erlaubt. Ergänzend zu den Vergleichswerten E₁* und E₂* könnte der dritte Vergleichswert E₃* herangezogen werden, um das entsprechende Verhalten der Prozessgröße E zu überprüfen. Steigt die im Prozess verrichtete Arbeit E/t schneller als dies durch den Gradienten E₃* beschrieben wird, so könnte dies als Abbruchkriterium verwendet werden (analog dazu könnte auch ein Mindestgradient vorgegeben werden).

Der vierte Vergleichswert E₄* schließlich bezeichnet als konstanter Wert die insgesamt bis zum Abschluss des Durchzugformens maximal zulässige verrichtete Arbeit (und liegt in diesem Beispiel auf der Kurve des ersten Vergleichswerts E₁*). Genügt zur Bewertung des zweiten Prozessschrittes alleine die Betrachtung der bei dessen Ende insgesamt aufgewandten Arbeit bzw. Energie, so kann der vierte Vergleichswert E₄* alleine verwendet werden, was die Bewertung insgesamt vereinfacht.

Grundsätzlich lassen sich verschiedene Vergleichswerte gleichzeitig oder aufeinanderfolgend vorgeben, um im fortlaufenden Prozess und/oder zu bestimmten Prozessereignissen (bsp. Beendigung eines Prozessschrittes) aus dem Vergleich zwischen E und E* eine Bewertung des Prozesses mit "IO" oder "NIO" vornehmen zu können. Besonders bevorzugt wird für einzelne Prozessschritte jeweils wenigstens ein nur für diesen Prozessschritt anzuwendender Vergleichswert herangezogen.

## Patentansprüche

1. Verfahren zur Überwachung und/oder Regelung eines Fließloch- und Gewindeformprozesses, bei dem ein einen Gewindeabschnitt aufweisendes Fügeelement, insbesondere eine Fließlochschraube, mit einer Drehzahl (N), mit einem Drehmoment (M) und mit einer Vorschubkraft (F) um einen Weg (Z) (Eindringtiefe) in und durch ein Werkstück getrieben wird, umfassend folgende Verfahrensschritte:
a) Bildung wenigstens einer Prozessgröße (E) unter Verwendung der für die Durchführung des Verfahrens aufgewendeten Energie oder eines daraus abgeleiteten Hilfswertes;
b) Vergleich der so erfassten Prozessgröße (E) mit wenigstens einem für die Durchführung des Verfahrens vorgegebenen oder währenddessen ermittelten Vergleichswerts (E*, E₁*, E₂*...);
c) Ausgabe eines von diesem Vergleich abhängigen Steuer- und/oder Anzeigesignals, um den ordnungsgemäßen oder fehlerhaften Ablauf des Verfahrens anzuzeigen und/oder in Abhängigkeit vom Vergleich das Verfahren zu steuern,
**dadurch gekennzeichnet,**
d) **dass** die Prozessgröße (E) gebildet wird mittels Aufsummieren der von einem vorgebbaren Startereignis bis zu einem vorgebbaren Verfahrensereignis aufgewandten Energie oder eines daraus abgeleiteten Hilfswertes.

2. Verfahren nach Anspruch 1, **dadurch gekennzeichnet, dass** eine zweite Prozessgröße gebildet wird mittels eines Gradienten (E₃), welcher die aktuell aufgewandte Energie oder einen daraus abgeleiteten Hilfswert in Bezug setzt zu der Zeit (t) oder der Eindringtiefe (Z) oder der Drehzahl (N) oder der Vorschubkraft (F).

3. Verfahren nach Anspruch 1 oder 2, **dadurch gekennzeichnet, dass** der Fließloch- und Gewindeformprozess in aufeinanderfolgende Prozessschritte unterteilt wird, wobei für jeden Prozessschritt wenigstens ein diesem zugehöriger Vergleichswert (E*, E₁*, E₂*...) in einer Steuerung hinterlegt ist.

4. Verfahren nach Ansprüchen 2 und 3, **dadurch gekennzeichnet, dass** die Prozessgröße (E) während eines Prozessschrittes mit dem zugehörigen Vergleichswert (E*, E₁*, E₂*...) vergleichen wird.

5. Verfahren nach Anspruch 3, **dadurch gekennzeichnet, dass** die Prozessgröße (E) nach Abschluss eines oder mehrerer Prozessschritte mit der Summe der einzelnen Vergleichswerte (E*) der bis dahin abgeschlossenen Prozessschritte verglichen wird.

6. Verfahren nach einem der vorigen Ansprüche, **dadurch gekennzeichnet, dass** der Fließloch- und Gewindeformprozess folgende Prozessschritte umfasst:
1. Aufsetzen des Fügeelements auf das Werkstück (Finden);
2. Erhöhen der Drehzahl (N) und Andrücken des Fügeelements gegen das Werkstück, bis das Werkstück zu fließen beginnt, wobei das Fügeelement dann bis zum Beginn des Gewindeabschnitts in das Werkstück gedrückt wird (Durchzugformen);
3. Eindrehen des Fügeelements in das Werkstück unter gleichzeitiger Ausbildung eines Gewindes im Werkstück (Gewindeformen);
4. Eindrehen des Fügeelements in das Werkstück, bis ein Kopf des Fügeelements auf dem Werkstück aufliegt und Anziehen des Fügeelements (Endanzug).

7. Verfahren nach einem der vorigen Ansprüche, **dadurch gekennzeichnet, dass** die zum Vergleich mit der Prozessgröße (E) heranzuziehenden Vergleichswerte (E*, E₁*, E₂*...) in Abhängigkeit von Prozessparametern bereitgestellt werden, wobei zu diesen Prozessparametern die Geometrie und/oder das Material des Fügeelements und/oder des Werkstücks gehören kann.

8. Verfahren nach einem der vorigen Ansprüche, **dadurch gekennzeichnet, dass** einer oder mehrere der Vergleichswerte (E*, E₁*, E₂*...) automatisch erzeugt und in einem Speicher hinterlegt werden unter Verwendung derjenigen Prozessgrö-ßen (E), die für eine Mehrzahl von zuvor erfolgreich abgeschlossenen Fließloch- und Gewindeformprozessen ermittelt wurden (Anlernen).

9. Fügevorrichtung, ausgebildet zur Durchführung des Verfahrens nach einem der vorhergehenden Verfahrensansprüche, umfassend eine zum Vergleich zwischen der Prozessgröße (E), die mittels Aufsummieren der von einem vorgebbaren Startereignis bis zu einem vorgebbaren Verfahrensereignis aufgewandten Energie oder eines daraus abgeleiteten Hilfswertes gebildet wird, und einem entsprechenden Vergleichswert (E*, E₁*, E₂*...) ausgebildete Steuereinheit, wobei die Steuereinheit ferner dazu ausgebildet ist, in Abhängigkeit des Vergleichsergebnisses, vorzugsweise unter Berücksichtigung vorgebbarer Toleranzen, das Verfahren abzubrechen und/oder eine entsprechende Fehlermeldung auszugeben.

## Claims

1. Method for monitoring and/or controlling a flow drilling and thread forming process, in which a joining element having a thread portion, in particular a flow drilling screw, is driven with a rotational speed (N), with a torque (M) and with a feed force (F) over a distance (Z) (penetration depth) into and through a workpiece, comprising the following method steps:
a) forming at least one process variable (E) using the energy expended in carrying out the method or an auxiliary value derived therefrom;
b) comparing the process variable (E) thus recorded with at least one comparison value (E*, E₁*, E₂*...) specified for carrying out the method or determined during the method;
c) outputting a control and/or display signal dependent on this comparison in order to indicate whether the method is running correctly or incorrectly and/or to control the method depending on the comparison,
**characterized in that**
d) the process variable (E) is formed by means of summing the energy expended from a specifiable start event to a specifiable method event or an auxiliary value derived therefrom.

2. Method according to claim 1, **characterized in that** a second process variable is formed by means of a gradient (E₃), which relates the currently expended energy or an auxiliary value derived therefrom to the time (t) or the penetration depth (Z) or the rotational speed (N) or the feed force (F).

3. Method according to either claim 1 or 2, **characterized in that** the flow drilling and thread forming process is divided into successive process steps, where for each process step, at least one comparison value (E*, E₁*, E₂*...) associated therewith is stored in a control system.

4. Method according to claims 2 and 3, **characterized in that** the process variable (E) is compared with the associated comparison value (E*, E₁*, E₂*...) during a process step.

5. Method according to claim 3, **characterized in that** the process variable (E) is compared, after completing one or more process steps, with the sum of the individual comparison values (E*) of the process steps completed up to that point.

6. Method according to any of the preceding claims, **characterized in that** the flow drilling and thread forming process comprises the following process steps:
1. positioning the joining element on the workpiece (finding);
2. increasing the rotational speed (N) and pressing the joining element against the workpiece until the workpiece begins to flow, the joining element then being pressed into the workpiece up to the beginning of the thread portion (pull-through forming);
3. screwing the joining element into the workpiece while simultaneously forming a thread in the workpiece (thread forming);
4. screwing the joining element into the workpiece until a head of the joining element rests on the workpiece and tightening the joining element (final tightening).

7. Method according to any of the preceding claims, **characterized in that** the comparison values (E*, E₁*, E₂*...) to be used for comparison with the process variable (E) are provided based on process parameters, these process parameters possibly including the geometry and/or the material of the joining element and/or of the workpiece.

8. Method according to any of the preceding claims, **characterized in that** one or more of the comparison values (E*, E₁*, E₂*...) are automatically generated and stored in a memory using the process variables (E) which were determined for a plurality of previously successfully completed flow drilling and thread forming processes (training).

9. Joining device, designed to carry out the method according to any of the preceding method claims, comprising a control unit designed for comparing the process variable (E) which is formed by means of summing up the energy expended from a specifiable start event to a specifiable method event or an auxiliary value derived therefrom with a corresponding comparison value (E*, E₁*, E₂*...), wherein the control unit is further designed to abort the method and/or output a corresponding error message depending on the comparison result, preferably taking into account specifiable tolerances.

## Revendications

1. Procédé pour la surveillance et/ou la régulation d'un processus de mise en forme par fluotournage et taraudage, dans lequel un élément d'assemblage, en particulier une vis pour fluotournage, présentant une section filetée est entraîné dans et à travers une pièce à une vitesse de rotation (N), avec un couple de rotation (M) et avec une force d'avance (F) en suivant un chemin (Z) (profondeur de pénétration), comprenant les étapes de procédé suivantes :
a) formation d'au moins une grandeur de processus (E) à l'aide de l'énergie dépensée pour la réalisation du procédé ou d'une valeur auxiliaire qui en est dérivée ;
b) comparaison de la grandeur de processus (E) ainsi recueillie avec au moins une valeur de comparaison (E*, E₁*, E₂*...) prédéfinie pour la réalisation du procédé ou déterminée pendant celui-ci ;
c) émission d'un signal de commande et/ou d'affichage dépendant de ladite comparaison afin d'indiquer le déroulement correct ou incorrect du procédé et/ou de commander le procédé en fonction de la comparaison,
**caractérisé en ce**
d) **que** la grandeur de processus (E) est formée en additionnant l'énergie dépensée depuis un événement de démarrage pouvant être prédéfini jusqu'à un événement de procédé pouvant être prédéfini ou une valeur auxiliaire qui en est dérivée.

2. Procédé selon la revendication 1, **caractérisé en ce qu'**une seconde grandeur de processus est formée au moyen d'un gradient (E₃) qui met en relation l'énergie actuellement dépensée ou une valeur auxiliaire qui en est dérivée avec le temps (t) ou la profondeur de pénétration (Z) ou la vitesse de rotation (N) ou la force d'avance (F).

3. Procédé selon la revendication 1 ou 2, **caractérisé en ce que** le processus de mise en forme par fluotournage et taraudage est divisé en étapes de processus successives, dans lequel au moins une valeur de comparaison (E*, E₁*, E₂*...) associée à chaque étape de processus est enregistrée dans une commande pour chaque étape de processus.

4. Procédé selon les revendications 2 et 3, **caractérisé en ce que** la grandeur de processus (E) est comparée pendant une étape de processus avec la valeur de comparaison (E*, E₁*, E₂*...) associée.

5. Procédé selon la revendication 3, **caractérisé en ce que** la grandeur de processus (E) est comparée, après l'achèvement d'une ou de plusieurs étapes de processus, avec la somme des valeurs de comparaison (E*) individuelles des étapes de processus achevées jusqu'ici.

6. Procédé selon l'une des revendications précédentes,
**caractérisé en ce que** le processus de mise en forme par fluotournage et taraudage comprend les étapes de processus suivantes :
1. mise en place de l'élément d'assemblage sur la pièce (trouver) ;
2. augmentation de la vitesse de rotation (N) et pressage de l'élément d'assemblage contre la pièce jusqu'à ce que la pièce commence à s'écouler, dans lequel l'élément d'assemblage est alors pressé dans la pièce jusqu'au début de la section filetée (mettre en forme par passage) ;
3. vissage de l'élément d'assemblage dans la pièce avec formation simultanée d'un taraudage dans la pièce (mettre en forme par taraudage) ;
4. vissage de l'élément d'assemblage dans la pièce jusqu'à ce qu'une tête de l'élément d'assemblage repose sur la pièce et serrage de l'élément d'assemblage (serrer pour finir).

7. Procédé selon l'une des revendications précédentes,
**caractérisé en ce que** les valeurs de comparaison (E*, E₁*, E₂*...) à utiliser pour la comparaison avec la grandeur de processus (E) sont fournies en fonction de paramètres de processus, dans lequel lesdits paramètres de processus peuvent inclure la géométrie et/ou le matériau de l'élément d'assemblage et/ou de la pièce.

8. Procédé selon l'une des revendications précédentes,
**caractérisé en ce qu'**une ou plusieurs des valeurs de comparaison (E*, E₁*, E₂*...) sont générées automatiquement et stockées dans une mémoire à l'aide des grandeurs de processus (E) qui ont été déterminées pour une pluralité de processus de mise en forme par fluotournage et taraudage précédemment achevés avec succès (apprendre).

9. Dispositif d'assemblage, conçu pour la réalisation du procédé selon l'une des revendications précédentes, comprenant une unité de commande configurée pour la comparaison entre la grandeur de processus (E), laquelle est formée en additionnant l'énergie dépensée depuis un événement de démarrage pouvant être prédéfini jusqu'à un événement de procédé pouvant être prédéfini ou une valeur auxiliaire qui en est dérivée, et une valeur de comparaison (E*, E₁*, E₂*...) correspondante, dans lequel l'unité de commande est en outre configurée pour interrompre le procédé et/ou émettre un message d'erreur correspondant en fonction du résultat de la comparaison, de préférence en tenant compte de tolérances pouvant être prédéfinies.
